# DEMANDE DE BREVET EUROPEEN

(11) **EP 0 736 357 A1**
(43) Date de publication de la demande: **09.10.1996**
(21) Numéro de dépôt: 96400677.9
(22) Date de dépôt: 28.03.1996
(51) Int. Cl.: B23K 26/00

(54) **Pièce de forme pour véhicule automobile ou ferroviaire et procédé de fabrication d'une telle pièce de forme**

(30) Priorité: 04.04.1995 FR 9503970
(71) Demandeur: SOLLAC, F-92800 Puteaux (FR)
(72) Inventeur: Krzys, Jean-marc, 59240 Dunkerque (FR); Oberle, Hugues, 59240 Dunkerque (FR); Peru, Gilles, 59240 Dunkerque (FR); Verrier, Pascal, 62580 Lumbres (FR)
(74) Mandataire: Lanceplaine, Jean-Claude

(57) **Abrégé**

L'invention a pour objet une pièce de forme (10) pour véhicule automobile ou ferroviaire, caractérisé en ce qu'elle comporte au moins une zone (12) en acier et au moins une zone en aluminium ou alliage d'aluminium soudées bord à bord à ladite au moins zone (12) en acier au moyen d'un faisceau à haute densité d'énergie, ladite zone (12) en acier étant située à des endroits nécessitant un emboutissage sévère.

L'invention a également pour objet un procédé de fabrication de ce type de pièces de forme.

## Description

La présente invention a pour objet une pièce de forme pour véhicule automobile ou ferroviaire et un procédé de fabrication d'une telle pièce de forme.

De plus en plus, la tendance des constructeurs de véhicules automobiles ou ferroviaires est de procéder à l'allégement de ceux-ci dans le but d'obtenir une diminution de la consommation d'énergie tout en augmentant la rigidité et la résistance aux chocs de ces véhicules afin d'améliorer la sécurité des occupants.

Pour diminuer le poids des véhicules, une solution consiste à utiliser des alliages légers comme l'aluminium ou un alliage d'aluminium, par exemple pour les planchers des véhicules ou des éléments de carrosserie.

Or, on sait que l'aluminium et les alliages d'aluminium présentent une faible tenue mécanique et de ce fait une résistance moindre, une faible tenue en fatigue ainsi qu'une mauvaise aptitude à l'emboutissage alors que l'acier présente une bonne tenue mécanique et une bonne aptitude à l'emboutissage.

En effet, l'aluminium ou les alliages d'aluminium ont un allongement à la rupture qui est de l'ordre de 25% alors qu'il peut atteindre 40% pour l'acier.

Il en est de même pour l'allongement de striction qui est faible pour l'aluminium et les alliages d'aluminium et qui est grand pour l'acier.

Ainsi, les déformations qu'il est possible d'obtenir en expansion sont nettement plus limitées avec l'aluminium ou les alliages d'aluminium qu'avec les aciers.

Par conséquent, les pièces de véhicule automobile ou ferroviaire, comme par exemple les éléments de carrosserie réalisés en aluminium ou en alliage d'aluminium doivent comporter des formes douces tandis que l'acier admet des emboutis plus sévères.

D'autre part, on sait que la capacité de pliage relève des mêmes propriétés que l'expansion, c'est à dire qu'elle dépend de l'allongement à la rupture.

Pour l'aluminium et les alliages d'aluminium, il est recommandé d'observer des rayons internes de pliage d'au moins 0,5 fois l'épaisseur et par sécurité une fois l'épaisseur.

Par contre, tous les aciers d'emboutissage, même à haute limite d'élasticité, supportent sans inconvénient un pliage à bloc, c'est à dire sur 0 fois l'épaisseur.

Cette limitation réduit considérablement les possibilités de bordage et de sertissage de pièces extérieures en aluminium ou en alliage d'aluminium sur leur support.

Par ailleurs, cette faible capacité de pliage pour l'aluminium et les alliages d'aluminium se répercute sur les zones tendues des pièces où il faut éviter de pratiquer de petits rayons, comme ceux qui sont courant sur les lignes de style, les nervures ou les contre-emboutis de poignées.

On voit donc que la réalisation de pièces de forme en aluminium ou en alliage d'aluminium est beaucoup plus problématique qu'avec de l'acier si bien que les pièces de forme en aluminium ou en alliage d'aluminium doivent avoir inévitablement des formes plus simples et elles doivent être plus nombreuses.

Un autre inconvénient pour l'utilisation de pièce en aluminium ou en alliage d'aluminium réside dans la difficulté de soudage de ce matériau sur des pièces en acier et notamment dans les soudages bord à bord d'un flan en acier avec un flan en aluminium ou en alliage d'aluminium.

Cela provient de la différence importante entre la température de fusion de l'acier et la température de fusion de l'aluminium ou des alliages d'aluminium.

En effet, la température de fusion de l'acier est, selon les nuances, comprise entre 1450 et 1700°C alors que la température de fusion de l'aluminium est comprise entre 550 et 700°C.

L'invention a pour but d'éviter ces inconvénients en proposant une pièce de forme pour véhicule automobile ou ferroviaire, caractérisée en ce qu'elle comporte au moins une zone en acier et au moins une zone en aluminium ou en alliage d'aluminium soudée bord à bord à ladite au moins zone en acier au moyen d'un faisceau à haute densité d'énergie, ladite zone en acier étant située à des endroits nécessitant un emboutissage sévère.

Selon d'autres caractéristiques de l'invention :
- la pièce de forme comporte plusieurs zones en acier situées à des endroits nécessitant un emboutissage sévère et à des endroits nécessitant des opérations de soudage pour l'assemblage de véhicule,
- la pièce de forme comporte plusieurs zones en acier situées à des endroits nécessitant un emboutissage sévère et à des endroits nécessitant des caractéristiques mécaniques élevées,
- la pièce de forme comporte plusieurs zones en acier situées à des endroits nécessitant un emboutissage sévère et à des endroits sollicités en fatigue.

L'invention a également pour objet un procédé de fabrication de pièces de forme pour véhicule automobile ou ferroviaire, caractérisé en ce que l'on soude bord à bord au moyen d'un faisceau à haute densité d'énergie au moins une portion de flan métallique en acier à au moins une portion de forme métallique en aluminium ou en alliage d'aluminium, lesdites portions étant planes, et on réalise la pièce de forme par emboutissage.

Selon d'autres caractéristiques de l'invention :
- on dispose les portions de flan métallique en acier dans les zones de la pièce de forme nécessitant un emboutissage sévère,
- on dispose les portions de flan métallique en acier dans les zones de la pièce de forme nécessitant un emboutissage sévère et dans les zones nécessitant des opérations de soudage pour l'assemblage du véhicule,
- on dispose les portions de flan métallique en acier dans les zones de la pièce de forme nécessitant un emboutissage sévère et dans les zones nécessitant des caractéristiques mécaniques élevées,
- on dispose les portions de flan métallique en acier dans les zones de la pièce de forme nécessitant un emboutissage sévère et dans les zones fortement sollicitées en fatigue.

Pour souder bord à bord au moyen du faisceau à haute densité d'énergie ladite au moins portion de flan métallique en acier à ladite au moins portion de flan métallique en aluminium ou en alliage d'aluminium, on procède de la façon suivante :
- on positionne les portions des flans métalliques en contact au niveau de leurs faces latérales à rabouter,
- on maintient en contact les portions des flans métalliques,
- on dirige sur l'une des faces principales de la portion du flan métallique en acier, un faisceau à haute densité d'énergie traversant cette portion du flan métallique et dont le point de focalisation est situé à une distance déterminée du plan de joint de manière à générer au niveau dudit plan de joint une température égale à la température de fusion de l'aluminium ou de l'alliage d'aluminium plus ou moins 10%,
- on déplace le faisceau à haute densité d'énergie parallèlement au plan de joint pour réaliser un joint soudé au niveau des faces latérales raboutées des portions des flans métalliques.

Selon encore d'autres caractéristiques de l'invention :
- la distance entre l'axe vertical passant par le point de focalisation du faisceau à haute densité d'énergie et le plan de joint est comprise entre 0,1 et 0,5mm et de préférence comprise entre 0,2 et 0,4mm,
- on exerce pendant le maintien des portions des flans métalliques, une pression latérale dirigée vers le plan de joint pour rattraper au niveau dudit plan de joint les jeux d'usinage,
- on exerce, pendant la formation du joint soudé, sur le plan de joint une pression de forgeage dirigée vers le plan de joint pour expulser les oxydes, les impuretés et les composés intermétalliques se formant au niveau de ce plan de joint,
- l'axe du faisceau à haute densité d'énergie est incliné d'un angle compris entre 1 et 5°.

Les caractéristiques et avantages de l'invention apparaîtront au cours de la description qui va suivre, donnée uniquement à titre d'exemple et faite en référence aux dessins annexés, sur lesquels :
- la Fig. 1 est une vue schématique en perspective d'un capot de véhicule automobile,
- la Fig. 2 est une vue schématique en élévation d'un panneau extérieur d'une portière de véhicule automobile,
- la Fig. 3 est une vue schématique en coupe transversale de deux portions de flans métalliques pendant le soudage par le procédé selon l'invention.

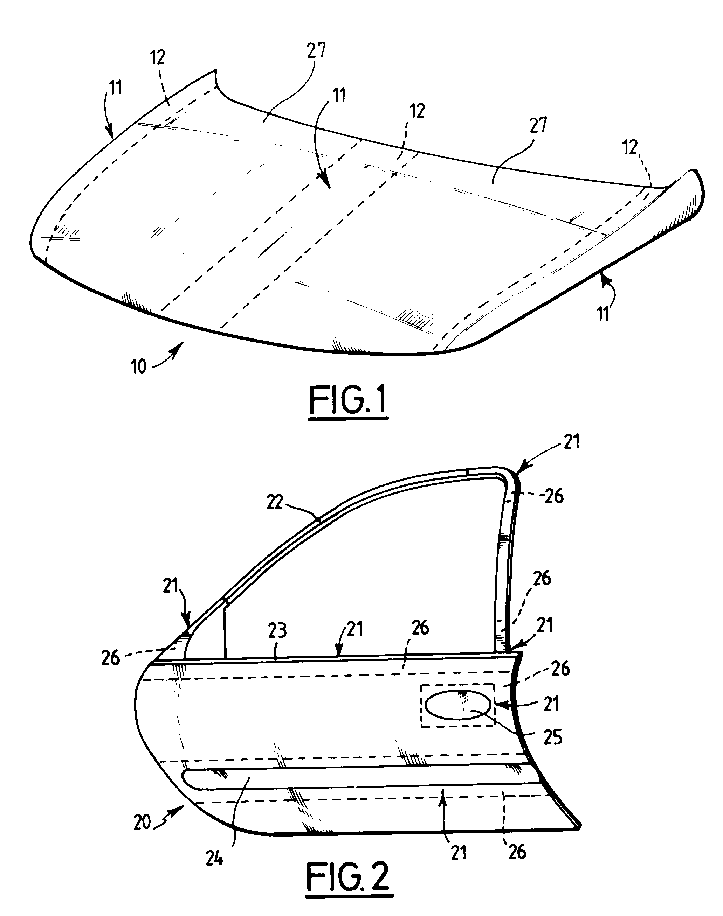

Sur les Figs. 1 et 2, on a représenté deux éléments de carrosserie d'un véhicule automobile formés par emboutissage, comme par exemple un capot 10 (Fig. 1) et un panneau extérieur 20 d'une portière (Fig. 2).

De manière classique et selon la géométrie à obtenir, les éléments d'une carrosserie comportent des endroits à emboutissage sévère, c'est à dire à rayon d'emboutissage important et des endroits dont le rayon d'emboutissage est beaucoup plus faible.

Sur le capot 10 représenté à titre d'exemple à la Fig. 1, les endroits 11 à emboutissage sévère sont constitués par les bords latéraux et par la partie centrale qui comporte une nervure de rigidification.

Sur la panneau de portière, représenté à titre d'exemple sur la Fig. 2, les endroits 21 à emboutissage sévère sont constitués par les coins du cadre 22 de la vitre, les nervures 23 et 24 et par le contre embouti 25 de la poignée.

Dans le but d'alléger les véhicules et de diminuer de ce fait la consommation de ces véhicules tout en leur conservant la rigidité indispensable pour la sécurité des occupants, les endroits 11 et 21 à emboutissage sévère respectivement du capot 10 et du panneau extérieur 20 sont constitués par des portions respectivement 12 et 26 de flan métallique en acier tandis que les parties complémentaires sont constituées par des portions 27 de flan métallique en aluminium ou en alliage d'aluminium.

Les portions 12 et 26 de flan métallique en acier et les portions 27 de flan métallique en aluminium ou en alliage d'aluminium sont à l'origine planes et soudées bord à bord au moyen d'un faisceau à haute densité d'énergie.

Ensuite, la pièce comportant des zones en aluminium ou en alliage d'aluminium et des zones en acier situées à des endroits nécessitant un emboutissage sévère est formée par emboutissage.

Selon une première variante, la pièce de forme selon l'invention peut comporter plusieurs zones en acier situées à des endroits nécessitant un emboutissage sévère et à des endroits nécessitant des opérations de soudage pour l'assemblage du véhicule.

Selon une seconde variante, la pièce de forme selon l'invention peut comporter plusieurs zones en acier situées à des endroits nécessitant un emboutissage sévère et à des endroits nécessitant des caractéristiques mécaniques élevées.

Selon une troisième variante, la pièce de forme selon l'invention peut comporter plusieurs zones en acier situées à des endroits nécessitant un emboutissage sévère et à des endroits fortement sollicités en fatigue.

Selon une quatrième variante, la pièce de forme selon l'invention peut comporter plusieurs zones en acier situées à des endroits nécessitant un emboutissage sévère, à des endroits nécessitant des opérations de soudage pour l'assemblage du véhicule, à des endroits nécessitant des caractéristiques mécaniques élevées et à des endroits fortement sollicités en fatigue.

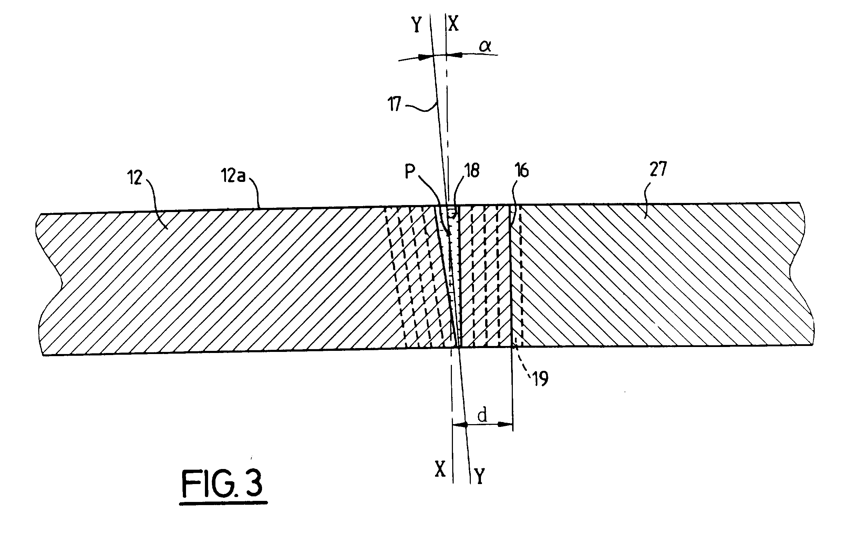

En se reportant à la Fig. 3, on va décrire le procédé selon l'invention pour la fabrication de pièces de forme comportant au moins une portion 12 de flan métallique en acier et au moins une portion 27 de flan métallique en aluminium ou en alliage d'aluminium.

Tout d'abord, les deux portions 12 et 27 sont placées bord à bord au niveau de leur face latérale à souder pour former un plan de joint 16.

Les deux portions 12 et 27 de flans métalliques sont planes.

Les deux portions 12 et 27 sont maintenues en contact par des moyens de bridage, non représentés, constitués par exemple par des barres de bridage placées sur les faces principales de chaque portion 12 et 27.

Le maintien des deux portions 12 et 27 est réalisé à proximité du plan de joint 16 à une distance par exemple comprise entre 5 et 10mm de ce plan de joint 16.

Ensuite, un faisceau à haute densité d'énergie 17 est dirigé sur la face principale 12a de la portion 12 du flan métallique en acier.

Le faisceau à haute densité d'énergie 17 traverse la portion 12 et son point de focalisation P est situé sensiblement à un tiers de l'épaisseur de la portion 12 au-dessous de la face principale 12a de ladite portion sur laquelle est dirigée le faisceau à haute densité d'énergie 17 et à une distance d déterminée du plan de joint 16 de manière à générer au niveau dudit plan de joint 16 une température égale à la température de fusion de l'aluminium ou de l'alliage d'aluminium de la portion 27 plus ou moins 10%.

Le faisceau à haute densité d'énergie 17 est déplacé parallèlement au plan de joint 16 pour réaliser un joint soudé au niveau des faces latérales raboutées des deux portions 12 et 27.

Pendant le maintien des deux portions 12 et 27, une pression latérale dirigée vers le plan de joint 16 est exercée sur lesdites portions 12 et 27 pour rattraper au niveau du plan de joint 16 les jeux d'usinage.

La distance d entre l'axe vertical XX passant par le point de focalisation P du faisceau à haute densité d'énergie 17 et le plan de joint 16 est comprise entre 0,1 et 0,5 mm et de préférence comprise entre 0,2 et 0,4mm.

Comme représenté à la Fig. 3, le faisceau à haute densité d'énergie 17 traverse l'épaisseur de la portion 12 de flan métallique ce qui permet d'homogénéiser la température dans l'épaisseur de ladite portion 12 sans avoir une grande zone affectée thermiquement en largeur.

Le faisceau à haute densité d'énergie 17 génère dans la portion 12 une première zone non représentée et appelée "capillaire vapeur" et autour de cette première zone, une seconde zone 18 appelée zone liquide qui a la forme d'un cône de très faible conicité.

Selon la loi de propagation de la chaleur dans l'acier et en fonction de la distance d déterminée entre le point de focalisation P et le plan de joint 16, l'isotherme 19 entourant la zone liquide 18 et se trouvant sensiblement au niveau du plan de joint 16 génère une température au niveau de ce plan de joint 16 qui est sensiblement égale à la température de fusion de l'aluminium ou de l'alliage d'aluminium constituant la seconde portion 27, plus ou moins 10%.

Dans l'exemple présent, la température au niveau de ce plan de joint 16 est de l'ordre de 650°C ce qui ramollit une certaine épaisseur de l'aluminium ou de l'alliage d'aluminium constituant la seconde portion 27 et réalise des liaisons atomiques entre l'acier et l'aluminium ou l'alliage d'aluminium des deux portions 12 et 27.

Si la température au niveau du plan de joint 16 est inférieure à la température de fusion de l'aluminium ou de l'alliage d'aluminium moins 10%, on obtient une diffusion lente des atomes entre les deux matériaux et une vitesse de soudage lente, voire une impossibilité de réaliser la liaison soudée entre les deux portions 12 et 27.

Si la température au niveau du plan de joint 16 est supérieure à la température de fusion de l'aluminium ou de l'alliage d'aluminium plus 10%, on obtient la formation de composés intermétalliques au niveau du plan de joint 16 et la formation de bourrelets.

De plus, pendant la formation du joint soudé, une pression de forgeage dirigée vers le plan de joint 16 est exercée sur ce plan de joint 16.

Cette pression de forgeage est constante ou variable et à pour but de maintenir les deux portions 12 et 27 en contact au niveau de leurs faces latérales et d'éviter ainsi toute modification de la surface par l'atmosphère de travail, comme par exemple par oxydation, ainsi que de permettre la réalisation de liaisons atomiques entre les deux matériaux et d'exclure les oxydes, les impuretés et les composés intermétalliques qui peuvent se trouver ou se former au niveau du plan de joint 16.

De préférence, l'axe YY du faisceau à haute densité d'énergie 17 forme avec l'axe vertical XX passant par le point de focalisation P dudit faisceau, un angle a compris entre 1 et 5° de telle manière que les isothermes 19 générés par le faisceau à haute densité d'énergie 17 soient parallèles au plan de joint 16 pour obtenir un front thermique se propageant parallèlement à ce plan de joint 16, comme représenté à la Fig. 3.

La liaison soudée ainsi obtenue entre les deux portions 12 et 27 est emboutissable.

Plusieurs portions de flans métalliques en acier et en aluminium ou en alliage d'aluminium peuvent être juxtaposées et soudées bord à bord par le procédé décrit ci-dessus de façon à réaliser des pièces comportant plusieurs zones en acier situées à des endroits nécessitant un emboutissage sévère et/ou à des endroits nécessitant des opérations de soudage pour l'assemblage sur la structure du véhicule et/ou à des endroits nécessitant des caractéristiques mécaniques élevées et/ou des endroits fortement sollicités en fatigue.

Après avoir réalisé le soudage bord à bord des différentes portions, la pièce est emboutie pour lui donner sa forme définitive.

Ainsi, la pièce de forme selon l'invention permet d'utiliser, dans des zones déterminées, au mieux les propriétés de chacun des matériaux composant une même pièce et d'alléger les véhicules dans le but d'obtenir une diminution d'énergie, tout en augmentant la rigidité et la résistance aux chocs de ces véhicules afin d'améliorer la sécurité des occupants.

Les portions en aluminium ou en alliage d'aluminium peuvent être remplacées par des portions en un matériau métallique léger.

## Revendications

1. Pièce de forme pour véhicule automobile ou ferroviaire, caractérisée en ce qu'elle comporte au moins une zone (12, 26) en acier et au moins une zone en aluminium ou en alliage d'aluminium soudée bord à bord à ladite au moins zone (12, 26) en acier au moyen d'un faisceau à haute densité d'énergie (17), ladite zone (12, 26) en acier étant située à des endroits (11, 21) nécessitant un emboutissage sévère.

2. Pièce de forme selon la revendication 1, caractérisée en ce qu'elle comporte plusieurs zones (12, 26) en acier situées en des endroits nécessitant un emboutissage sévère et à des endroits nécessitant des opérations de soudage pour l'assemblage du véhicule.

3. Pièce de forme selon la revendication 1, caractérisée en ce qu'elle comporte plusieurs zones (12, 26) en acier situées à des endroits nécessitant un emboutissage sévère et à des endroits nécessitant des caractéristiques mécaniques élevées.

4. Pièce de forme selon la revendication 1, caractérisée en ce qu'elle comporte plusieurs zones (12, 26) en acier situées à des endroits nécessitant un emboutissage sévère et à des endroits fortement sollicités en fatigue.

5. Procédé de fabrication de pièces de forme (10, 20) pour véhicule automobile ou ferroviaire, selon l'une quelconque des revendications précédentes, caractérisé en ce que l'on soude bord à bord au moyen d'un faisceau à haute densité d'énergie (17) au moins une portion (12, 26) de flan métallique en acier à au moins une portion (27) de flan métallique en aluminium ou en alliage d'aluminium, lesdites portions (12, 26, 27) étant planes, et on réalise la pièce de forme (10, 20) par emboutissage.

6. Procédé selon la revendication 5, caractérisé en ce que l'on dispose les portions (12, 26) de flan métallique en acier dans les zones de la pièce de forme (10, 20) nécessitant un emboutissage sévère.

7. Procédé selon la revendication 5, caractérisé en ce que l'on dispose les portions (12, 26) de flan métallique en acier dans les zones de la pièce de forme (10, 20) nécessitant un emboutissage sévère et dans les zones nécessitant des opérations de soudage pour l'assemblage du véhicule.

8. Procédé selon la revendication 5, caractérisé en ce que l'on dispose les portions (12, 26) de flan métallique en acier dans les zones de la pièce de forme (10, 20) nécessitant un emboutissage sévère et dans les zones nécessitant des caractéristiques mécaniques élevées.

9. Procédé selon la revendication 5, caractérisé en ce que l'on dispose les portions (12, 26) de flan métallique en acier dans les zones de la pièce de forme (10, 20) nécessitant un emboutissage sévère et dans les zones fortement sollicitées en fatigue.

10. Procédé selon l'une quelconque des revendications 5 à 9, caractérisé en ce que :
- on positionne les portions (12, 27) des flans métalliques en contact au niveau de leurs faces latérales à rabouter,
- on maintient en contact les portions (12, 27) des flans métalliques,
- on dirige sur l'une des faces principales de la portion (12) du flan métallique en acier, le faisceau à haute densité d'énergie (17) traversant cette portion (12) du flan métallique et dont le point de focalisation P est situé à une distance d déterminée du plan de joint (16) de manière à générer au niveau dudit plan de joint (16) une température égale à la température de fusion de l'aluminium ou de l'alliage d'aluminium, plus ou moins 10%,
- on déplace le faisceau à haute densité d'énergie (17) parallèlement au plan de joint (16) pour réaliser un joint soudé au niveau des faces latérales raboutées des portions (12, 27) des flans métalliques.

11. Procédé selon la revendication 10, caractérisé en ce que la distance d entre l'axe vertical passant par le point de focalisation P du faisceau à haute densité d'énergie (17) et le plan de joint (16) est comprise entre 0,1 et 0,5mm.

12. Procédé selon les revendications 10 et 11, caractérisé en ce que la distance d entre l'axe vertical passant par le point de focalisation P du faisceau à haute densité d'énergie (17) et le plan de joint (16) est comprise entre 0,2 et 0,4mm.

13. Procédé selon la revendication 10, caractérisé en ce que, pendant le maintien des portions (12, 27) des flans métalliques, on exerce une pression latérale dirigée vers le plan de joint (16) pour rattraper au niveau dudit plan de joint (16) les jeux d'usinage.

14. Procédé selon la revendication 10, caractérisé en ce que, pendant la formation du joint soudé, on exerce sur le plan de joint (16) une pression de forgeage dirigée vers ce plan de joint (16) pour expulser les oxydes, les impuretés et les composés intermétalliques se formant au niveau de ce plan de joint (16).

15. Procédé selon la revendication 10, caractérisé en ce que l'axe du faisceau à haute densité d'énergie (17) est incliné d'un angle compris entre 1 et 5°.
